# EUROPEAN PATENT APPLICATION

(11) **EP 3 085 460 A1**
(43) Date of publication of application: **26.10.2016**
(21) Application number: 16166914.8
(22) Date of filing: 25.04.2016
(51) Int. Cl.: B05B 15/04, H01H 9/28, H02G 3/14

(54) **PROTECTING COVER FOR A SOCKET OR SWITCH BOX**

(30) Priority: 24.04.2015 NL 2014709
(71) Applicant: KlikCaps Holding B.V., 3994 TR Houten (NL)
(72) Inventor: Renfurm, Humphrey Aloysius, 3994 TR Houten (NL)
(74) Representative: Nederlandsch Octrooibureau

(57) **Abstract**

A protecting cover for protecting exposed wall-mounted electrical elements, such as a socket or a switch box, which electrical element has a metal mounting plate, and the protecting cover includes:
a main body for covering the electrical element wherein the main body is made of an electrically insulating material and wherein the main body has two or more apertures; and
at least two magnets which can apply a magnetic force of 800-1000 grams, where each one of the at least two magnets is secured in one of the at least two apertures in a close or tight fit manner.

## Description

### FIELD OF THE INVENTION

The invention relates to a protecting cover. The invention further relates to a protecting cover for protecting an electrical element such as a socket or a switch box from plaster, paint or any other product, as well as protecting people from inadvertently contacting (high) voltages when the socket cover plate or switch box cover plate is removed.

### BACKGROUND OF THE INVENTION

Very often coatings such as plaster, paint or the like, are applied to walls, floors or ceilings only after the electrical installation of different electrical elements such as switches, sockets and outlets is finished. Usually the switch or socket cover plate is removed and the exposed surfaces are covered with masking tape or the like to ensure that the coating is not applied to the surface of the remaining parts of the switch or socket that will be exposed after removal of the cover plate. However, applying the masking tape is a time consuming process. Moreover, applying such masking tape is no guarantee that people will not inadvertently touch parts of the switch or socket that are still connected to the mains.

US 5,003,128 discloses an electrical switch and outlets protecting cover for painting fitting over and removably adhering to a wall-mounted electrical box or to electrical components fixed to the box. The cover is of generally rectangular shape and comprises two end flat sections at the back face to which permanent flat magnet elements are secured. US 5,003,128 does specify how they are attached to the plastic cover plate. Most probably they are glued to the plastic cover plate. The magnets are adapted to contact and adhere the protecting cover directly to the wall-mounted electrical box. In this way, the time consuming process of applying masking tape is avoid. However, young children can still too easily remove the cover by applying a not too strong force because the glued connection between the flat magnets and the plastic cover plate will easily break. Moreover, this document is silent as to applied magnetic forces.

US7,214,898 shows a protecting cover with cylindrical magnets located securely in annular members. The cover of this prior art is only intended to be applied over sockets or switch boxes of which the outward plastic cover is still in place. No special requirements are therefore applicable as to the strength of the magnetic forces because when such a protecting cover is inadvertently removed no dangerous voltage carrying metal parts will be exposed.

### SUMMARY OF THE INVENTION

It would be advantageous to have an improved protecting cover for a socket or switch box. It is the object of the present invention to provide a protecting cover that can easily be applied and removed by adults and not by younger children.

To better address this concern, a first aspect of the invention provides a protecting cover for protecting exposed wall-mounted electrical elements, such as a socket or a switch box, which electrical element comprises a metal mounting plate, the protecting cover comprising:
a main body for covering the electrical element wherein the main body is made of an electrically insulating material and wherein the main body comprises at least two apertures; and
at least two magnets arranged to apply a magnetic force of 800-1000 grams wherein each one of the at least two magnets is secured in one of the at least two apertures in a close or tight fit manner and wherein each of the at least two magnets has a diameter equal to d wherein d preferably has a range from 6,25 millimeters to 3,75 millimeters, more preferably has a range from 5,5 millimeters to 4,5 millimeters and even more preferably is 5 millimeters, and wherein each of the at least two magnets has a height equal to h wherein h preferably has a range from 12,5 millimeters to 7,5 millimeters, more preferably has a range from 11 millimeters to 9 millimeters and even more preferably is 10 millimeters.

This way, the protecting cover can adhere to the socket or switch box in the wall with a very high force because of the strong specific magnets which can still be removed easily enough by an adult but not by younger children. Also, the magnets cannot be removed from the protecting cover without destroying the protecting cover because the magnets are physically secured in a close fit manner inside apertures wherein the apertures are part of the main body of the protecting cover. I.e., the magnets are, preferably, not glued to the protecting cover material at all.

The body part may be made of polypropylene. This provides an advantage for manufacturing a protecting cover made of an electrically isolating material, thereby allowing an easy manipulation of the protecting cover in order to place/remove it on/from the electrical element.

At least one of the at least two magnets may be secured in each of the at least two apertures in a close or tight fit manner without glue. In this way, the magnets cannot be easily removed from the protecting cover.

At least one of the at least two magnets may have an elongated, e.g. bar or cylindrical shape. This allows to easily securing the magnets inside of the apertures of the main body.

At least one of the at least two magnets may be made of neodymium, iron and boron.

At least one of the at least two magnets may comprise a coating made of nickel and copper.

At least one of the at least two magnets may be arranged to perform a force of 800 grams.

The body part may comprise four magnets.

The body part may comprise six magnets.

The body part may comprise at least one rim extending outwardly from the protecting cover wherein the at least one rim is 1.2mm high, or less, and wherein the at least one rim is located on a side of the main body such that, when applied to a metal mounting plate, it can protect at least an upper edge of the metal mounting plate of the electrical element against liquid from paint and/or stucco. In this way, the protection of the cover plate of the electrical element is improved, as the rim of the protecting cover provides an extra protection mechanism for avoiding that paint or any other kind of (liquid) product reaches the electrical element.

The body part may comprise at least one extending pin arranged to be inserted in a bolt hole of the metal mounting plate for preventing the protecting cover after application to the metal mounting plate from rotating wherein the extending pin extends, preferably, between 2 to 4mm, more preferably 3mm from the main body. Moreover, such pins help to align the application of the protective cover plate to the metal mounting plate such that the one or more rims, if present, are located at the intended location.

The body part may comprise an openable part moveable between an opened and a closed position such that, when applied to a metal mounting plate, if the openable part is in the opened position it allows access to the electrical element and if the openable part is in the closed position it prevents access to the electrical element. In this way, the electrical element can be reached even when the protecting cover is placed on the electrical element. This allows for using the electrical element without having to remove the protecting cover from the electrical element.

The invention also relates to an assembly of a protecting cover and a metal mounting plate of a wall-mounted electrical element, such as a socket or a switch box, wherein the protecting cover is defined as in one of the claims 1-10.

In another aspect, the invention provides a method for covering an exposed electrical element with a protecting cover as defined in any of the claims 1-11, the method comprising the steps of:
- providing the protecting cover, and wherein the electrical element comprises a metal cover plate covered with a plastic outer cover,
- removing the plastic outer cover from the electrical element such that the metal mounting plate of the electrical element is exposed,
- placing the protecting cover on the exposed metal mounting plate of the electrical element such that the magnets of the protecting cover are attached to the metal mounting plate.

### BRIEF DESCRIPTION OF THE DRAWINGS

The invention will be explained in detail with reference to some drawings that are only intended to show embodiments of the invention and not to limit the scope. The scope of the invention is defined in the annexed claims and by its technical equivalents. I.e., a person skilled in the art will understand that features, components, elements, etc. explicitly used to explain the invention can be substituted by technical equivalents unless otherwise stated. Moreover, separate features of different embodiments can be combined, even if not explicitly shown in the drawings or explained in the specification, unless such combination is physically impossible.

These and other aspects of the invention are apparent from and will be elucidated with reference to the embodiments described hereinafter. In the drawings,
Fig. 1, Fig. 2, Fig. 3, Fig. 4, Fig. 5 and Fig. 6 are diagrams illustrating aspects of a protecting cover for a socket or switch box.
Fig. 7 illustrates a method of placing a protecting cover on a socket or switch box.
Fig. 8, Fig. 9, Fig. 10 and Fig. 11 are diagrams illustrating aspects of a protecting cover for a socket or switch box.
Fig. 12 is a diagram illustrating aspects of a protecting cover for a socket or switch box.
Fig. 13, 14 and 15 are diagrams illustrating aspects of a protecting cover for a socket or switch box.

### DETAILED DESCRIPTION OF EMBODIMENTS

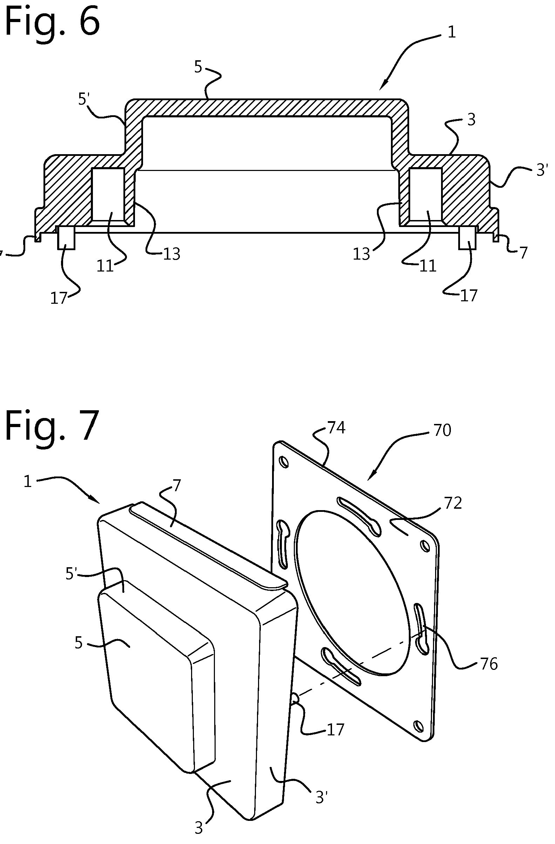

The object of the present invention is to provide a removable protecting cover 1 to protect uncovered parts of a socket or switch box, or other electric elements, still present in a wall during painting or stucco activities. As shown in Fig. 7, such sockets or switch boxes have a metal mounting plate 72 which is exposed once a plastic cover plate is removed. The protecting cover is to be applied to such a metal mounting plate 72. As will be explained, magnetic elements 9 (not shown in Fig. 7) will contact the metal mounting plate 72, thereby attaching the protecting cover to the metal mounting plate 72. An extending rim 7 may cover an upper edge 74 of the metal mounting plate 72 for protecting at least the upper side of the switch box or socket against liquid from paint and/or stucco flowing downward along the wall. The extending pin 17 may fit in a bolt hole 76 of the metal mounting plate 72 of the electrical element 70 for preventing the protecting cover from rotating. Both the rim 7 and the pin 17 also assist in aligning the protecting cover with the metal mounting plate 72. The extending pin 17 extends, preferably, between 2 to 4mm, more preferably 3mm from the main body.

The metal mounting plate 72 is preferably made of standard metal material, i.e., which comprises, at least in part, iron. Moreover, if having a square form the standard size is 70mm*70mm*1mm.

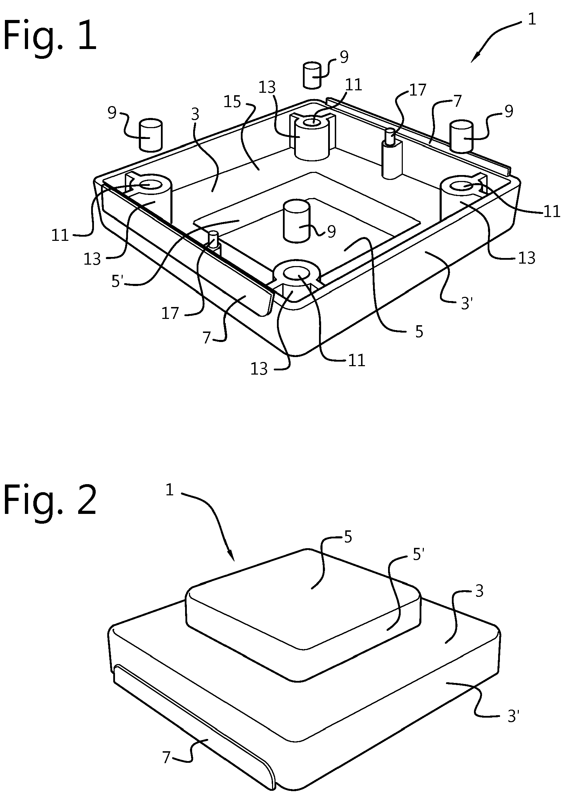

Fig. 1 is a diagram illustrating aspects of a removable protecting cover for a socket or switch box. The socket or switch box may be protected by the removable protecting cover by placing it over the metal mounting plate 72 (figure 7). The protecting cover comprises a main body 1 forming a hollow cavity 15. The main body 1 may be integrally molded as a single piece. The main body 1 may be made of an electrically insulating material and may be molded from a semi-rigid but slightly pliable polymeric material so that the material will flex when pressed against the metal mounting plate 72 of a socket or switch box. The polymeric material may be polypropylene. The main body 1 may have a trapezoidal shape. The trapezoidal shape of the main body 1 may be a square or may have a rectangular or any other suitable trapezoid shape. The main body 1 may be formed by a first deck portion 3 for covering the portion of the metal mounting plate 72 of a socket or a switch box and by a perimeter wall 3' for engaging the metal mounting plate 72 wherein the perimeter wall 3' is configured to overlie outward facing portions of the electrical socket or switch box. Such outwardly facing portions may e.g. be a switch box handle or resilient metal ground strips remaining when a user removes the plastic outer cover of a grounded electrical socket. The perimeter wall 3' may comprise four sides, i.e., a left side, a right side, a top side and a bottom side, which are connected at their edges to form e.g. a rectangle. The first deck portion 3 may comprise, at least in part, a flat front face.

The main body 1 of Fig. 1 may comprise a second deck portion 5 and a holding wall 5' for grabbing the protecting cover in order to place or remove the protecting cover on or from the metal mounting plate 72 of the socket or switch box wherein the holding wall 5' extends outward from the second deck portion 5 and attaches the second deck portion 5 to the first deck portion 3.

In such a setup, the second deck portion 5 together with the holding wall 5' forms a further cavity that can accommodate extending parts of the switch box or socket to be covered.

The main body 1 of the protecting cover of Fig. 1 comprises at least two annular members 13 projecting from the first deck portion 3. These two or more annular members 13 have holes 11 which may have a depth corresponding to the width of the sides of the perimeter wall 3'. The two or more annular members 13 are, preferably, located in corners of the perimeter wall 3' if this has a rectangular shape. Moreover, these two or more annular members 13 may be attached to the perimeter wall 3'such that they are better fixed to the protecting cover.

The main body 1 of the protecting cover of Fig. 1 may comprise four annular members 13 projecting from a rear wall of the front of the first deck portion 3. Each of the four small annular members 13 may be placed in a different area of the first deck portion 3. Preferably, however, these four annular members 13 are located in the four corners of the perimeter wall 3' if this has a rectangular shape. This is shown in figure 1. Again, these four annular members 13 may be attached to the perimeter wall 3'such that they are better fixed to the protecting cover.

The protecting cover of Fig. 1 comprises also at least two magnets 9. The at least two magnets 9 may be elongated. The at least two magnets 9 may have the shape of a rod or bar. The at least two magnets 9 may have a cylindrical shape or any other suitable shape. They may have a rectangular cross section. Each of the at least two magnets 9 is securely located inside of the hole 11 of one of the annular members 13. The at least two magnets 9 are firmly clamped inside the hole 11 of the annular member 13 in a close or tight fit manner, preferably without using glue or any other kind of product in such a way that the at least two magnets 9 cannot be removed from the annular members 13 without destroying the annular members 13. The at least two magnets 9 may be made of neodymium, iron and boron and they may comprises a coating made of nickel and copper. The at least two magnets 9 may have a height of 10 millimeters, a diameter of 5 - 5.5 millimeters and a weight of 1,4 grams. The height, diameter and weight preferably have a tolerance of +/- 10% and more preferably the height and the diameter of the at least two magnets 9 may have a tolerance of +/-0,1 millimeters.

Moreover, the magnets are selected such that they have a magnetic force of 800-1000 grams. It has turned out that magnets with such magnetic forces meet the requirement that they can still easily enough be removed and yet guarantee that younger children almost certainly cannot remove them from the metal mounting plate of a socket or switch box.

The body part 1 may comprise at least one rim 7 extending outward from the protecting cover wherein the at least one rim 7 is preferably as high as or lower than the thickness of the metal mounting plate 72 of the socket / switch box. The at least one rim 7 may be located on the side of the perimeter wall 3' intended to cover the upper edge of the metal mounting plate 72 in use. In this way, the rim 7 is arranged to protect at least the upper edge of the metal mounting plate 72 of the electrical element against liquid from paint and/or stucco flowing along the wall to which the metal mounting plate 72 is attached. The at least one rim 7 may, alternatively or additionally, be located on any other side of the perimeter wall 3'.

The body part 1 may comprise at least one extending pin 17 extending outward from the rear part of the first deck portion 3, wherein the at least one extending pin 17 is arranged to be inserted in at least one bolt hole 76 of the metal mounting plate 72 of the electrical element for preventing the protecting cover from rotating. Also, such one or more extending pins facilitate to apply the protecting plate to the metal mounting plate 72 because they help to align the protecting cover plate to the metal mounting plate 72. I.e., in standardized metal mounting plates 72, the bolt holes 76 are always present at the same location because they are used for bolts to attach the metal mounting plate to a standard mounting box with nuts (not shown) which is mounted in the wall to accommodate electrical wiring, as persons skilled in the art know. The at least one extending pin 17 may be located on the top part of the first deck portion 3 and/or may be located on the bottom part of the first deck portion 3 and/or may be located on the right part of the first deck portion 3 and/or may be located in the left part of the first deck portion 3. Preferably, the at least one pin is arranged on a side where no rim 7 is provided because, then, the at least one pin 17 is better visible for the user which facilitates the aligning process in use. The at least one pin 17 may be made as an integral part of the body part 1. Alternatively, the body part 1 may comprise at least one aperture inside of which the at least one extending pin 17 may be attached. The at least one extending pin 17 may be attached to the body part 1 by any other suitable way.

Common elements from Fig. 1 have the same reference numbers as in Fig. 1 in the rest of the figures.

Fig. 2 illustrates a front view of the protecting cover of Fig. 1.

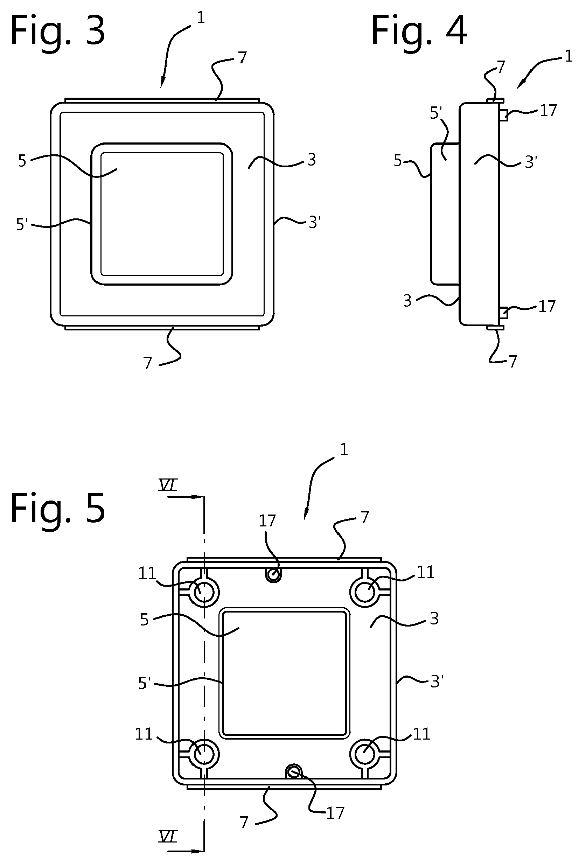

Fig. 3 illustrates a top view of the protecting cover of Fig. 1 from the front.

Fig. 4 illustrates a side view of the protecting cover of Fig. 1. According to Fig. 3, the main body 1 may have a depth of 23,2 millimeters with a tolerance of less than 5%, preferably less than 2%.

Fig. 5 illustrates a top view of the protecting cover of Fig. 1 from the back which also shows some dimensions. These dimensions are, preferably determined by the standard dimensions of switch boxes and sockets, e.g., as in use in Europe. According to Fig. 5, the main body 1 may have a width of 70 millimeters and a length of 72,5 millimeters, and the second deck portion 5 may have a length of 50 millimeters and a width of 50 millimeters. Acceptable tolerances would be less than 5%, preferably less than 2%.

Fig. 6 illustrates a section of a side view of the protecting cover of Fig. 1.

The main body 1 preferably has dimensions such that it matches the dimensions of a standard metal mounting plate 72. In Europe, such standard dimensions correspond to a rectangular and square shape.

When at least two opposing sides of the main body 1 are provided with rims 7 the distance between such two rims is, preferably, equal to the standard dimension of a switch box or socket with a tolerance of less than 5%, preferably less than 2%, such that the two rims can be arranged over the edges of the metal mounting plate 72 and the perimeter wall 3' then contacts the metal mounting plate 72.

Fig. 7 is presented to illustrate a method of placing a protecting cover on the metal mounting plate 72 of a socket or switch box. In the arrangement shown in figure 7, the protecting cover is provided with at least one pin 17 and at least one rim 7.

According to the method illustrated in Fig. 7, first the plastic cover protecting the socket or the switch box 70 should be removed (not shown in Fig. 7). After removing the plastic cover of the socket or switch box 70, the metal mounting plate 72 of the socket of switch box 70 is exposed and the protecting cover 1 is placed on the metal mounting plate 72 in such a way that the magnet elements 9 (not shown in Fig. 7) contact the metal of the metal mounting plate 72, thereby attaching the protecting cover against the metal mounting plate 72 with a predetermined force. The rim 7 is placed over the upper edge 74 of the metallic plate 72 for protecting the upper edge of the metal mounting plate 72 of the electrical element against inflowing liquid from paint and/or stucco. The extending pin 17 s is inserted in the bolt hole 76 of the metal mounting plate 72 of the electrical element 70 for preventing the protecting cover from rotating.

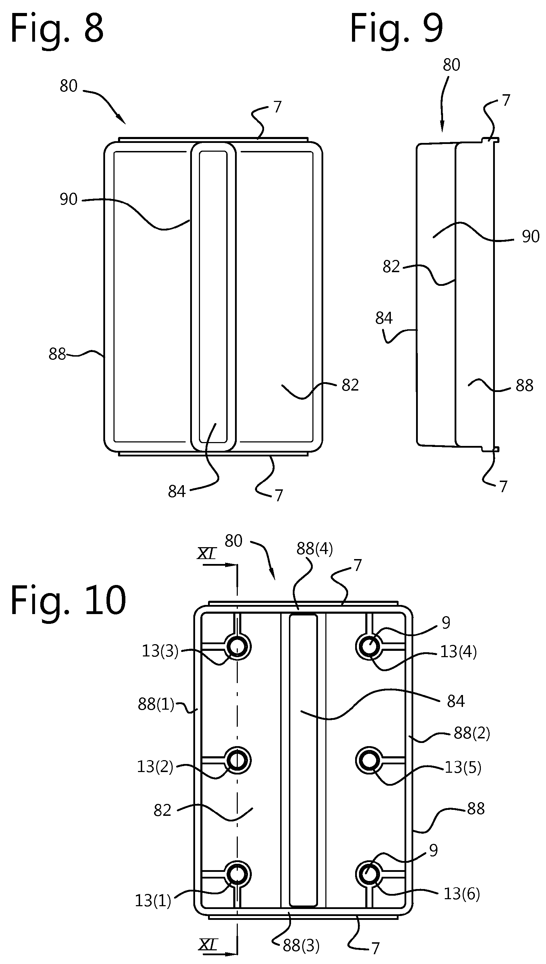

Fig. 8, Fig. 9, Fig. 10 and Fig. 11 are diagrams illustrating aspects of an alternative protecting cover for a socket or switch box. Elements in Fig. 8-11 which are the same as in Fig. 1-7 have the same reference numbers as in Fig. 1-7, and these elements will not be described again.

The protecting cover of Fig.'s 8-11 has a main body 80. The main body 80 may be integrally molded as a single piece. The main body 80 may be made of an electrically insulating material and may be molded from a semi-rigid but slightly pliable polymeric material so that the material will flex when pressed against the metal mounting plate of a socket or switch box. The polymeric material may be polypropylene.

The main body 80 may also be provided with one or more extending pins 17 which extend, preferably, between 2 to 4mm, more preferably 3mm from the main body 80.

The protecting cover of Fig. 8-11 comprises six magnets 9. The protecting cover 80 has a substantially longer length than width and would be suitable to be used for standard sockets accommodating two electrical connections. The main body 80 may comprise a first deck portion 84 and a second deck portion 82. The main body 80 may comprise a perimeter wall 88 extending outward from the first deck portion 82. The main body 80 may comprise a holding wall 90 extending outward from the second deck portion 84 and connecting the first deck portion 82 with the second deck portion 84. The perimeter wall 88 may comprise a left side, a right side, a top side and a bottom side and the first deck portion 82 may comprise a flat front. The second deck portion 84 and its holding wall 90 may extend along the entire length of the main body 80.

Fig. 8 illustrates a front view of the protecting cover. According to Fig. 8, the main body 1 may have a width of 73 millimeters and a height of 107,7 millimeters with a tolerance of less than 5%, preferably less than 2%. These dimensions fit to standard dimensions of a socket / switch box (or combination thereof) with two connections. The main body 80 may have any other suitable height and width.

Fig. 9 illustrates a side view of the protecting cover of Fig. 8. According to Fig. 3, the main body 80 may have a depth of 28,2 millimeters. The main body 80 may have any other suitable depth.

Fig. 10 illustrates a top view of the protecting cover of Fig. 8 from the back. In order to better explain Fig. 10, perimeter wall is divided into two long wall sides 88(1), 88(2) and two short wall sides 88(3), 88(4), the short wall sides interconnecting the two long wall sides 88(1), 88(2) as shown. Moreover, the six drawn magnet holders, here drawn as annular members, are explicitly numbered as 13(1), ..., 13(6). The length of the protecting cover of Fig. 8 is shown from bottom to top (vertical direction), i.e., form short wall side 88(3) to short wall side 88(4). The width of the protecting cover of Fig. 8 is shown from left to right (horizontal direction), i.e., from long side wall 88(1) to long side wall 88(2). A first annular member 13(4) may be placed on the top right part of the main body 80, a second annular member 13(3) may be placed on the top left part of the main body 80, a third annular member 13(5) may be placed on the middle right part of the main body 80, a fourth annular member 13(2) may be placed on the middle left part of the main body 80, a fifth annular member 13(6) may be placed on the bottom right part of the main body 80 and a sixth annular member 13(1) may be placed on the bottom left part of the main body 80. A first magnet 9 may be placed in annular member 13(4). A second magnet 9 may be placed in annular member 13(3). A third magnet 9 may be placed in annular member 13(5). A fourth magnet 9 may be placed in annular member 13(2). A fifth magnet 9 may be placed in annular member 13(6). A sixth magnet 9 may be placed in annular member 13(1).

The six magnets 9 may be located on the rear part of the first deck 82 symmetrically as shown in Fig. 10. The centers of the magnets may be vertically separated by a distance of 38,6 millimeters and may be horizontally separated by a distance of 45 millimeters. Tolerances in these dimensions may be less than 10%, preferably less than 5%. These dimensions have turned out to work very well as to the requirements that the protecting cover should be easily removable by an adult and almost impossibly removable by younger children.

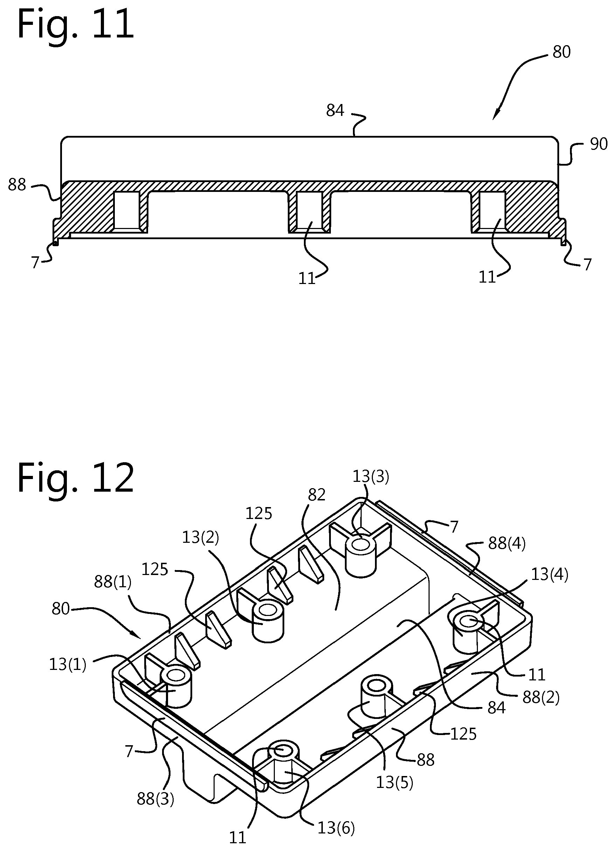

Fig. 11 illustrates a section of a side view of the protecting cover of Fig. 8. The distance between two rims 7 located at opposite sides along the length direction is preferably 105 - 105,2 mm.

Fig. 12 is a diagram illustrating aspects of an alternative protecting cover for a socket or switch box.

Elements in Fig. 12 which are the same as in Fig. 1-11 have the same reference numbers as in Fig. 1-11, and these elements will not be described again. Fig. 12 illustrates a top view of the protecting cover from the back. The main body 80 may comprise at least one reinforcement element 125. The main body 80 may comprise any number of reinforcement elements 125. A first and a second reinforcement elements 125 may be placed between magnet holders 13(4) and 13(5). A third and a fourth reinforcement elements 125 may be placed between magnet holders 13(3) and 13(2). A fifth and a sixth reinforcement elements 125 may be placed between magnet holders 13(5) and 13(6). A seventh and an eighth reinforcement elements 125 may be placed between magnet holders 13(2) and 13(1).

The eight reinforcement elements 125 may be located symmetrically on the rear part of the first deck 82 as shown in Fig. 12. The reinforcement elements 125 may be separated by a distance of 53 millimeters measured in a direction parallel to short wall sides 88(3), 88(4). The first and the third reinforcement elements may be separated respectively by a distance of 24 millimeters from the short wall side 88(4) measured in a direction parallel to long wall sides 88(1), 88(2). The sixth and the eighth reinforcement elements may be separated respectively by a distance of 24 millimeters from the short wall side 88(3) measured in a direction parallel to long wall sides 88(1), 88(2). The first, the third, the fifth and the seventh reinforcement elements may be separated by a distance of 13 millimeters respectively from the second, the fourth, the sixth and the eighth reinforcement elements measured in a direction parallel to long wall sides 88(1), 88(2). Tolerances in these dimensions may be less than 10%, preferably less than 5%. These dimensions have turned out to work very well for reinforcing the protecting cover structure thereby preventing the long wall sides 88(1), 88(2) from bending when pressure is exerted on them in use. The reinforcement elements 125 may also located on the rear part of the first deck 82 in any other suitable way. The reinforcement elements 125 may comprise a triangular shape wherein one of the sides of each triangle may be placed against the inside of one of the long wall sides 88(1), 88(2) and another side of each triangle may be placed against the first deck portion 82. The reinforcement elements 125 may comprise any other suitable shape such as a square, a rectangle, etc...

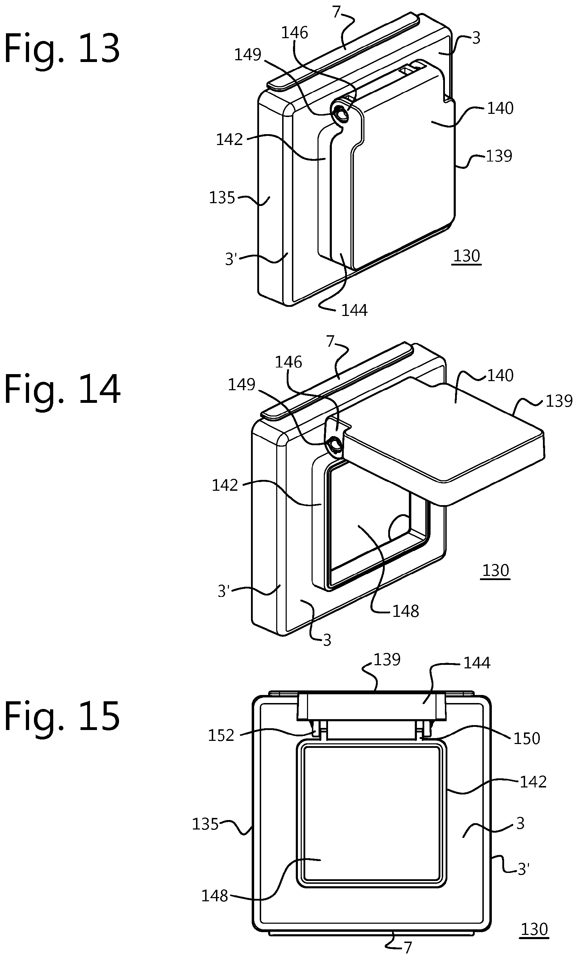

Fig. 13, Fig. 14 and Fig. 15 are diagrams illustrating aspects of an alternative protecting cover for a socket or switch box. Elements in Fig.'s. 13-15 which are the same as in Fig.'s 1-7 have the same reference numbers as in Fig.'s. 1-7, and these elements will not be described again.

The protecting cover of Fig.'s 13-15 has a main body 130. The main body 130 may comprise a first piece 135 and a second piece 139 molded as separated pieces. The first piece 135 and the second piece 139 may be made of an electrically insulating material and may be molded from a semi-rigid but slightly pliable polymeric material so that the material will flex when pressed against the metal mounting plate of a socket or switch box. The polymeric material may be polypropylene. They may be made from different materials.

The first piece 135 of the main body 130 of Fig.'s 13-15 may comprise a first deck portion 3. The first deck portion 3 may comprise an opening 148 in a flat front face. The second piece 139 of the main body 130 of Fig.'s 13-15 is arranged to close the opening 148 in a closed position, as shown in Fig. 13. The second piece 139 can be moved into an opened position in which the opening 148 is uncovered, as shown in Fig. 14. The second piece 139 may comprise a second deck portion 140. The main body 130 may comprise a holding wall 142-144 for grabbing the protecting cover in order to place or remove the protecting cover on or from the metal mounting plate 72 of the socket or switch box. The holding wall may comprise a first wall part 142 and a second wall part 144. The first wall part 142 may be part of the first piece 135 of the main body 130 of Fig.'s 13-15 wherein the first wall part 142 extends outward from the first deck portion 3. The second wall part 144 may be part of the second piece 139 of the main body 130 of Fig.'s 13-15 wherein the second wall part 144 extends outward from the first deck portion 140. The second wall part 144 and the first wall part 142 may have equal or substantially equal outer dimensions such that the second wall part 144 and the first wall part 142 fit up to one another when the second piece 139 is in its closed position. Here, "substantially" equal refers to a situation where the respective outer dimensions only deviate in size due to manufacturing tolerances. Alternatively, the second wall part 144 has a larger outer dimension than the outer dimension of the first wall part 142 such, in the closed position, the second wall part 144 covers the first wall part 142 and, at least partly, engages first deck portion 3.

In such a setup, the second deck portion 5 together with the holding wall 142-144 forms a further cavity that can accommodate extending parts of the switch box or socket to be covered.

The main body 130 may comprise attaching means 146. The attaching means 146 may attach the second piece 139 to the first piece 135 such that the second piece 139 is movable between the closed position (shown in Fig. 13) wherein the second piece 139 covers the opening 148 and the opened position (shown in Fig. 14) wherein the second piece 139 exposes the opening 148. In this way, when the protecting cover of Fig.'s 13-15 is mounted on the metal mounting plate 72 of the electrical element, the closed position of the second piece 139 prevents access to the electrical element and the opened position of the second piece 139 allows access to the electrical element.

The attaching means 146 of the protecting cover of Fig.'s 13-15 may comprise a hinging arrangement. The hinging arrangement may comprise a shaft attaching the first piece 135 and the second piece 139 such that the second piece 139 can rotate with respect to the second piece 139 between the closed position and the opened position. The first wall part 142 of the first piece 135 may comprise a first extending part 150. The second wall part 144 of the second piece 139 may comprise a second extending part 152. The first extending part 150 of the first wall part 144 may comprise a first and a second hole. The second extending part 152 of the second wall part 144 may comprise a third and a fourth hole. The first, second, third and fourth holes may be aligned such that a shaft 149 may traverse all of them thereby allowing the second piece 139 to rotate around the shaft 149 with respect to the first piece 135 between the opened and the closed position.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A protecting cover for protecting exposed wall-mounted electrical elements, such as a socket or a switch box, which electrical element comprises a metal mounting plate, the protecting cover comprising:
a main body for covering the electrical element wherein the main body is made of an electrically insulating material and wherein the main body comprises at least two apertures; and
at least two magnets arranged to apply a magnetic force of 800-1000 grams wherein each one of the at least two magnets is secured in one of the at least two apertures in a close or tight fit manner and wherein each of the at least two magnets has a diameter equal to d wherein d preferably has a range from 6,25 millimeters to 3,75 millimeters, more preferably has a range from 5,5 millimeters to 4,5 millimeters and even more preferably is 5 millimeters, and
wherein each of the at least two magnets has a height equal to h wherein h preferably has a range from 12,5 millimeters to 7,5 millimeters, more preferably has a range from 11 millimeters to 9 millimeters and even more preferably is 10 millimeters.

2. The protecting cover of claim 1, wherein the main body is made of polypropylene.

3. The protecting cover of claim 1 or 2, wherein at least one of the at least two magnets is secured in each of the at least two apertures in a closed fit form without using glue.

4. The protecting cover of claim 1, 2 or 3, wherein at least one of the at least two magnets has an elongated shape, such as a rod or bar shape.

5. The protecting cover of any of the preceding claims, wherein at least one of the at least two magnets is made of neodymium, iron and boron.

6. The protecting cover of any of the preceding claims, wherein at least one of the at least two magnets comprises a coating made of nickel and copper.

7. The protecting cover of any of the preceding claims, wherein at least one of the at least two magnets is arranged to perform a force of 800 grams.

8. The protecting cover of any of the claims 1-7, wherein the body part comprises four magnets.

9. The protecting cover of any of the claims 1-7claim 1, wherein the body part comprises six magnets.

10. The protecting cover of any of the preceding claims, wherein the body part comprises at least one rim extending outward from the protecting cover wherein the at least one rim is 1.2mm high, or less, and wherein the at least one rim is located on a side of the main body such that, when applied to a metal mounting plate, it can protect at least an upper edge of the metal mounting plate of the electrical element against liquid from paint and/or stucco.

11. The protecting cover of any of the preceding claims, wherein the main body comprises at least one extending pin arranged to be inserted in a bolt hole of the metal mounting plate for preventing the protecting cover after application to the metal mounting plate from rotating wherein the extending pin extends, preferably, between 2 to 4mm, preferably 3mm from the main body.

12. The protecting cover of any of the preceding claims, wherein the main body comprises an openable part moveable between an opened position and a closed position such that, when applied to a metal mounting plate, if the openable part is in the opened position it allows access to the electrical element and if the openable part is in the closed position it prevents access to the electrical element.

13. An assembly of a protecting cover and a metal mounting plate of a wall-mounted electrical element, such as a socket or a switch box, wherein the protecting cover is defined as in one of the claims 1-11.

14. The assembly according to claim 13, wherein the metal mounting plate comprises at least one bolt hole and the main body comprises at least one extending pin arranged to be inserted in said bolt hole of the metal mounting plate for preventing the protecting cover after application to the metal mounting plate from rotating wherein the metal mounting plate is, preferably, 1mm thick and the extending pin extends, preferably, between 2 to 4mm, more preferably 3mm from the main body.

15. A method for covering an exposed electrical element with a protecting cover as defined in any of the claims 1-12, the method comprising the steps of:
- providing the protecting cover, and wherein the electrical element comprises a metal cover plate covered with a plastic outer cover,
- removing the plastic outer cover from the electrical element such that the metal mounting plate of the electrical element is exposed,
- placing the protecting cover on the exposed metal mounting plate of the electrical element such that the magnets of the protecting cover are attached to the metal mounting plate.
